# EUROPEAN PATENT APPLICATION

(11) **EP 4 394 577 A1**
(43) Date of publication of application: **03.07.2024**
(21) Application number: 23802138.0
(22) Date of filing: 17.11.2023
(51) Int. Cl.: G06F 3/06

(54) **METHOD FOR OPERATING NON-VOLATILE MEMORY ON BASIS OF TEMPERATURE OF MEMORY AND ELECTRONIC DEVICE FOR SUPPORTING SAME**

(30) Priority: 17.11.2022 KR 20220154518; 20.12.2022 KR 20220179492
(71) Applicant: Samsung Electronics Co., Ltd., Suwon-si, Gyeonggi-do 16677 (KR)
(72) Inventor: SHIN, Changmi, Suwon-si, Gyeonggi-do 16677 (KR); LEE, Jaekab, Suwon-si, Gyeonggi-do 16677 (KR)
(74) Representative: Arnold & Siedsma
(86) International application number: PCT/KR2023/018551
(87) International publication number: WO 2024/107004

(57) **Abstract**

According to an embodiment, there may be provided an electronic device comprising memory storing instructions, wherein the memory including first memory and second memory; and a processor operatively connected to the memory, wherein the instructions, when executed by the processor, cause the electronic device to identify a temperature of the second memory, identify a temperature of the first memory based on identifying that the temperature of the second memory is within a warning range for the second memory, and limit an operation of the second memory based on the temperature of the first memory. Other various embodiments are possible as well.

## Description

### [Technical Field]

Embodiments of the disclosure relate to an electronic device, a method for operating a memory of an electronic device, and to a machine-readable storage medium storing instructions which, when executed by a processor, cause the electronic device to perform this method.

### [Background Art]

An electronic device may be configured in two aspects of hardware and software. In the hardware aspect, the electronic device may include a processor (CPU or SOC) for calculating and processing a process and a memory where data for the process is loaded. In the software aspect, the electronic device may include an operating system (or kernel) for performing basic management of the system and applications that run on the operating system to execute the processes. For example, the processor (CPU) loads the data corresponding to the operating system and executes it, and loads an application on the memory while the operating system is running to execute the application on the operating system. The process is finally performed by the execution of the application.

Recently, as the electronic device provides various services, various applications may be included and, as several applications are simultaneously executed, the management of the memory where the applications are loaded and executed becomes important. The electronic device may detect and manage the temperature of the memory.

### [Disclosure of Invention]

### [Solution to Problems]

According to an embodiment of the disclosure, an electronic device may comprise memory storing instructions, wherein the memory including first memory and second memory, and a processor operatively connected to the memory. The instructions, when executed by the processor, may cause the electronic device to identify a temperature of the second memory. The instructions, when executed by the processor, may cause the electronic device to identify a temperature of the first memory based on identifying that the temperature of the second memory is within a warning range for the second memory. The instructions, when executed by the processor, may cause the electronic device to limit an operation of the second memory based on the temperature of the first memory.

According to an embodiment of the disclosure, an electronic device may comprise memory storing instructions, wherein the memory including first memory and second memory, and a processor operatively connected to the memory. The instructions, when executed by the processor, may cause the electronic device to identify a temperature of the first memory. The at least one processor may be configured to limit an operation of the second memory based on identifying that the temperature of the first memory is out of a stable range for the first memory.

According to an embodiment of the disclosure, a method for operating memory of an electronic device may comprise identifying a temperature of second memory of the electronic device. The method may comprise identifying a temperature of first memory of the electronic device based on identifying that the temperature of the second memory is within a warning range for the second memory. The method may comprise limiting an operation of the second memory based on the temperature of the first memory.

According to an embodiment of the disclosure, a method for operating memory of an electronic device may comprise identifying temperature of a first memory of the electronic device. The method may comprise limiting an operation of second memory of the electronic device based on identifying that the temperature of the first memory is out of a stable range for the first memory.

According to an embodiment of the disclosure, a storage medium storing instructions, the instructions may cause, when executed by a processor of an electronic device, the electronic device to perform at least one operation. The at least one operation may include identifying a temperature of second memory of the electronic device. The at least one operation may include identifying a temperature of first memory of the electronic device based on identifying that the temperature of the second memory is within a warning range for the second memory. The at least one operation may include limiting an operation of the second memory based on the temperature of the first memory.

According to an embodiment of the disclosure, a storage medium storing instructions, the instructions may cause, when executed by a processor of an electronic device, the electronic device to perform at least one operation. The at least one operation may include identifying a temperature of first memory of the electronic device. The at least one operation may include limiting an operation of second memory of the electronic device based on identifying that the temperature of the first memory is out of a stable range for the first memory.

An embodiment of the disclosure is not limited to the foregoing objectives, and other objectives would readily be appreciated by a skilled artisan from the following detailed description taken in conjunction with the accompanying drawings.

### [Brief Description of Drawings]

FIG. 1 is a block diagram illustrating an electronic device in a network environment according to an embodiment of the disclosure;
FIG. 2 is a block diagram illustrating an example configuration of an electronic device according to an embodiment of the disclosure;
FIG. 3 is a flowchart illustrating a method for operating a memory based on a temperature of the memory by an electronic device according to an embodiment of the disclosure;
FIGS. 4A and 4B are views illustrating an example of setting a temperature limit for a memory by an electronic device according to an embodiment of the disclosure;
FIG. 5 is a flowchart illustrating a method for operating a second memory based on the temperature of a first memory and the second memory by an electronic device according to an embodiment of the disclosure;
FIG. 6 is a flowchart illustrating a method for operating a memory based on a temperature of the memory by an electronic device according to an embodiment of the disclosure;
FIG. 7 is a flowchart illustrating a method for operating a second memory based on a temperature of a first memory by an electronic device according to an embodiment of the disclosure;
FIG. 8 is a flowchart illustrating a method for determining whether to maintain limiting the operation of a memory by an electronic device according to an embodiment of the disclosure;
FIG. 9 is a block diagram illustrating an example configuration of an electronic device according to an embodiment of the disclosure;
FIG. 10 is a flowchart illustrating a method for operating a memory through a controller based on the temperature of a first memory and a second memory by an electronic device according to an embodiment of the disclosure; and
FIG. 11 is a flowchart illustrating a method for operating a memory through a controller based on a temperature of a first memory by an electronic device according to an embodiment of the disclosure.

### [Mode for the Invention]

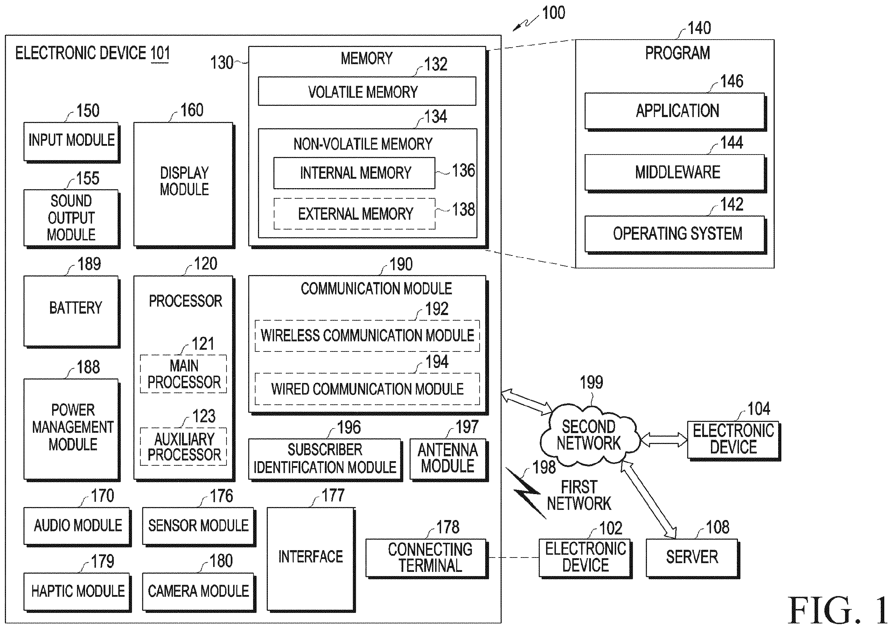

FIG. 1 is a block diagram illustrating an electronic device 101 in a network environment 100 according to an embodiment of the disclosure.

Referring to FIG. 1, the electronic device 101 in the network environment 100 may communicate with at least one of an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display 160 may include, for example, a display, a hologram device, or a projector and control circuitry to control a corresponding one of the display, hologram device, and projector. According to an embodiment, the display 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as Bluetooth^{™}, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to an embodiment, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra-low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or health-care) based on 5G communication technology or loT-related technology.

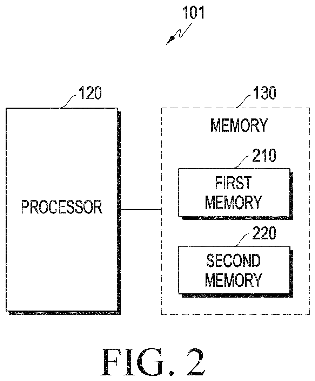

FIG. 2 is a block diagram illustrating an example configuration of an electronic device 101 (e.g., the electronic device 101 of FIG. 1) according to an embodiment of the disclosure.

Referring to FIG. 2, in an embodiment, an electronic device 101 may include a memory 130 including a first memory 210 and a second memory 220 and at least one processor 120 operatively connected to the first memory 210 and the second memory 220.

In an embodiment, the memory 130 may be a multi-chip package (MCP) that includes a volatile memory (e.g., the volatile memory 132 of FIG. 1) and a non-volatile memory 134. In an embodiment, the MCP may include dynamic random access memory (DRAM) and storage, but is not limited thereto. In an embodiment, the storage may be universal flash storage (UFS) or an embedded multi-media card (eMMC), and the storage is not limited to the above-described examples. In an embodiment, the first memory 210 may be included in the volatile memory 132 of FIG. 1. In an embodiment, the second memory 220 may be included in the non-volatile memory 134 of FIG. 1. In an embodiment, the first memory 210 and the second memory 220 together may be disposed in the MCP. In an embodiment, each of the first memory 210 and the second memory 220 may include a sensing circuit for obtaining the internal temperature. Memory 130, or non-volatile memory 134, may store instructions. The instructions, when executed by the processor 120, may cause the electronic device 101 to perform at least one operation. The operation performed by the electronic device 101 will be described below. In an embodiment of the disclosure, "The processor performs an operation" may include "Instructions stored in the memory, when executed by the processor, causes the electronic device to perform the operation."

In an embodiment, the processor 120 may perform an overall operation for limiting the operation of the first memory 210 and/or the second memory 220 to identify the temperature of the first memory 210 and/or the second memory 220 and control the temperature inside the memory 130. In an embodiment, the processor 120 may include one or more processors for identifying the temperature of the memory 130 and/or limiting the operation of the memory 130. The one or more processors may be operatively connected to the first memory 210 and the second memory 220. In an embodiment, the processor 120 may identify the temperatures of the first memory 210 and the second memory 220 through at least one sensing circuit included in each of the first memory 210 and the second memory 220.

Although FIG. 2 illustrates that the electronic device 101 includes the first memory 210, the second memory 220, and/or the processor 120, the disclosure is not limited thereto, and the electronic device 101 may further include at least one component illustrated in FIG. 1. For example, the electronic device 101 may further include the display module 160 of FIG. 1. In an embodiment, based on limiting the operation of the memory 130, the electronic device 101 may display related information through the display module 160. The electronic device 101 may control the display module 160 to display information related to at least one operation limited due to the limiting of the operation of the memory 130.

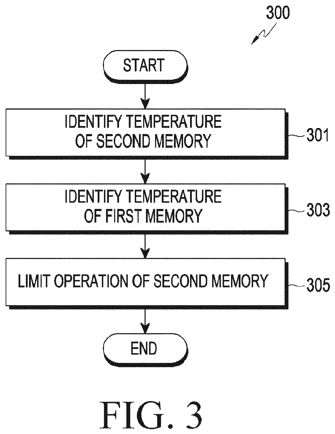

FIG. 3 is a flowchart 300 illustrating a method for operating a memory (e.g., the memory 130 of FIG. 1) based on a temperature of the memory (e.g., the memory 130 of FIG. 1) by an electronic device (e.g., the electronic device 101 of FIG. 1 or the electronic device 101 of FIG. 2) according to an embodiment of the disclosure.

In an embodiment, the operations shown in FIG. 3 are not limited to the shown order but may rather be performed in other various orders. For example, the order of the operations may be changed, and at least two operations may be performed in parallel. According to an embodiment, more or less operations than those of FIG. 3 may be performed.

Referring to FIG. 3, in operation 301, in an embodiment, the electronic device 101 (e.g., the processor 120 of FIG. 1 or the processor 120 of FIG. 2) may identify the temperature of the second memory (e.g., the second memory 220 of FIG. 2).

In an embodiment, the electronic device 101 may identify the temperature of the second memory 220 through a sensing circuit included in the second memory 220. In an embodiment, the temperature of the second memory 220 obtained based on the sensing circuit included in the second memory 220 may have an error of about ± 10 degrees Celsius according to the joint electron device engineering council (JEDEC) standard. In an embodiment, the electronic device 101 may set at least one temperature limit for the second memory 220, based on booting of the second memory 220. In an embodiment, the at least one temperature limit may include a maximum high temperature limit, a high temperature limit, a low temperature limit, and/or a maximum low temperature limit. In an embodiment, the electronic device 101 may set a temperature range higher than the low temperature limit and lower than the high temperature limit as a stable range for the second memory 220. In an embodiment, the electronic device 101 may set a temperature range higher than the maximum low temperature limit and lower than the low temperature limit and a temperature range higher than the high temperature limit and lower than the maximum high temperature limit as a warning range for the second memory 220. In an embodiment, the electronic device 101 may allow the second memory 220 to operate stably by controlling the temperature of the second memory 220 to fall within the stable range.

In operation 303, in an embodiment, the electronic device 101 may identify the temperature of the first memory (e.g., the first memory 210 of FIG. 2).

In an embodiment, the electronic device 101 may identify the temperature of the first memory 210, based on identifying that the temperature of the second memory 220 is within a warning range for the second memory 220. In an embodiment, the electronic device 101 may identify the internal temperature of the first memory 210, based on the refresh rate of the first memory 210. In an embodiment, the first memory 210 may update the refresh rate at a preset period by changing the mode register (MR) 4 value. The updated refresh rate may be determined based on the internal temperature of the first memory 210. In an embodiment, as the refresh rate is changed, the electronic device 101 may identify the temperature update flag (TUF) value recorded accordingly. Based on identifying that the updated refresh rate is 1x, the electronic device 101 may identify that the temperature of the first memory 210 is about 85 degrees Celsius, and the example of the temperature of the first memory 210 is not limited to the above-described example. In an embodiment, the temperature of the first memory 210 may correspond to a reference temperature when the updated refresh rate is 1x. In an embodiment, the refresh rate may be larger than 1x when the temperature of the first memory 210 is lower than the reference temperature. For example, when the first memory 210 is lower than the reference temperature, the refresh rate of the first memory 210 may be updated to about 1.3x to about 8x. The refresh rate may be shorter than 1x when the temperature of the first memory 210 is higher than the reference temperature. For example, when the temperature of the first memory 210 is higher than the reference temperature, the refresh rate of the first memory 210 may be updated from about 0.125x to about 0.7x. In an embodiment, the operation of updating the refresh rate of the first memory 210 may be referred to as a "refresh operation". In an embodiment, the specific value of the refresh rate and the reference temperature may be changed according to an embodiment of the disclosure. In an embodiment, the error in the temperature of the first memory 210 obtained based on the sensing circuit included in the first memory 210 may be smaller than the error in the temperature of the second memory 220 obtained based on the sensing circuit included in the second memory 220. In an embodiment, the error in the temperature of the first memory 210 may be about 2 degrees Celsius or less. In an embodiment, the electronic device 101 may determine whether to limit the operation of the second memory 220, based on the temperature of the first memory 210, which has a relatively smaller error than that of the temperature of the second memory 220.

In operation 305, in an embodiment, the electronic device 101 may limit the operation of the second memory 220.

In an embodiment, the electronic device 101 may limit the operation of the second memory 220 based on identifying whether the temperature of the first memory 210 is within a stable range for the first memory 210. In an embodiment, the electronic device 101 may set at least one temperature limit for the first memory 210, based on booting of the first memory 210. In an embodiment, the at least one temperature limit may include a maximum high temperature limit, a high temperature limit, a low temperature limit, and/or a maximum low temperature limit. In an embodiment, the electronic device 101 may set a temperature range higher than the low temperature limit and lower than the high temperature limit as a stable range for the first memory 210. In an embodiment, the electronic device 101 may set a temperature range higher than the maximum low temperature limit and lower than the low temperature limit and a temperature range higher than the high temperature limit and lower than the maximum high temperature limit as a warning range for the first memory 210.

In an embodiment, the electronic device 101 may maintain the operation state of the second memory 220, based on identifying that the temperature of the first memory 210 is within the stable range for the first memory 210. The electronic device 101 may not limit the operation of the second memory 220 by maintaining the operation state of the second memory 220. In an embodiment, the electronic device 101 may maintain the performance of the second memory 220, based on identifying that the temperature of the first memory 210, which has a relatively small error, is within the stable range for the first memory 210. For example, when the temperature of the second memory 220 is within the warning range for the second memory 220, the electronic device 101 may not limit the operation of the second memory 220 based on identifying that the temperature of the first memory 210 is within the stable range for the first memory 210.

In an embodiment, the electronic device 101 may limit the operation of the second memory 220 based on identifying that the temperature of the first memory 210 is not within the stable range for the first memory 210. The electronic device 101 may limit the operation of the second memory 220 based on identifying that the temperature of the first memory 210 is out of the stable range, thereby enhancing the reliability of data stored in the second memory 220.

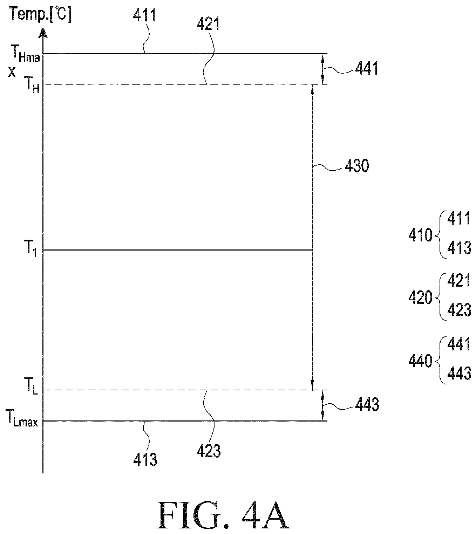

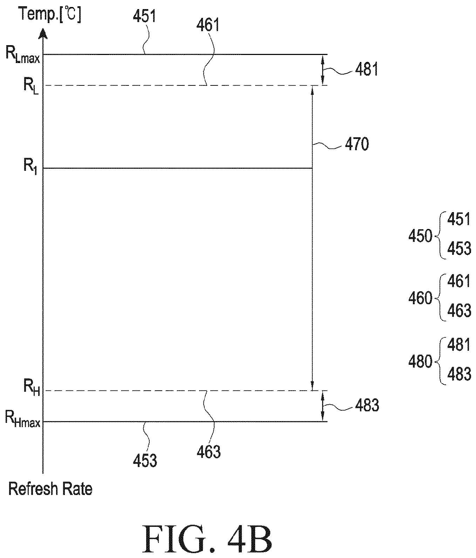

FIGS. 4A and 4B are views illustrating an example of setting a temperature limit for a memory (e.g., the memory 130 of FIG. 1) by an electronic device (e.g., the electronic device 101 of FIG. 1 or the electronic device 101 of FIG. 2) according to an embodiment of the disclosure.

Referring to FIG. 4A, in an embodiment, the electronic device 101 may set at least one temperature limit T_{Hmax}, T_{H}, T_{L}, and T_{Lmax} for the second memory 220 based on booting of the second memory 220. In an embodiment, a reference temperature T₁ for the second memory 220 may be preset. In an embodiment, the at least one temperature limit for the second memory 220 may include maximum temperature limits 410 and temperature limits 420. In an embodiment, the at least one temperature limit for the second memory 220 may include a maximum high temperature limit 411, a high temperature limit 421, a low temperature limit 423, and/or a maximum low temperature limit 413. In an embodiment, the electronic device 101 may set a temperature range higher than the low temperature limit 423 and lower than the high temperature limit 421 as the stable range 430 for the second memory 220. In an embodiment, the electronic device 101 may set the temperature range 443 higher than the maximum low temperature limit 413 and lower than the low temperature limit 423 and the temperature range 441 higher than the high temperature limit 421 and lower than the maximum high temperature limit 411 as the warning range 440 for the second memory 220. In an embodiment, the electronic device 101 may allow the second memory 220 to operate stably by controlling the temperature of the second memory 220 to fall within the stable range 430.

Referring to FIG. 4B, in an embodiment, the electronic device 101 may set at least one temperature limit for the first memory 210, based on booting of the first memory 210. In an embodiment, the temperature limit for the first memory 210 may be indicated by the refresh rate R_{Lmax}, R_{L}, R_{H}, and R_{Hmax} for the first memory 210. In an embodiment, the electronic device 101 may allow the second memory 220 to operate stably by controlling the temperature of the second memory 220 to be present in the stable range 430. In an embodiment, the at least one temperature limit for the first memory 210 may include maximum temperature limits 450 and temperature limits 460. In an embodiment, the at least one temperature limit for the first memory 210 may include a maximum high temperature limit 451, a high temperature limit 461, a low temperature limit 463, and/or a maximum low temperature limit 453. In an embodiment, the electronic device 101 may set the temperature range between the low temperature limit 463 and the high temperature limit 461 as the stable range 470 for the first memory 210. In an embodiment, the electronic device 101 may set the temperature range 483 between the maximum low temperature limit 453 and the low temperature limit 463 and the temperature range 481 between the high temperature limit 461 and the maximum high temperature limit 451 as the warning range 480 for the first memory 210.

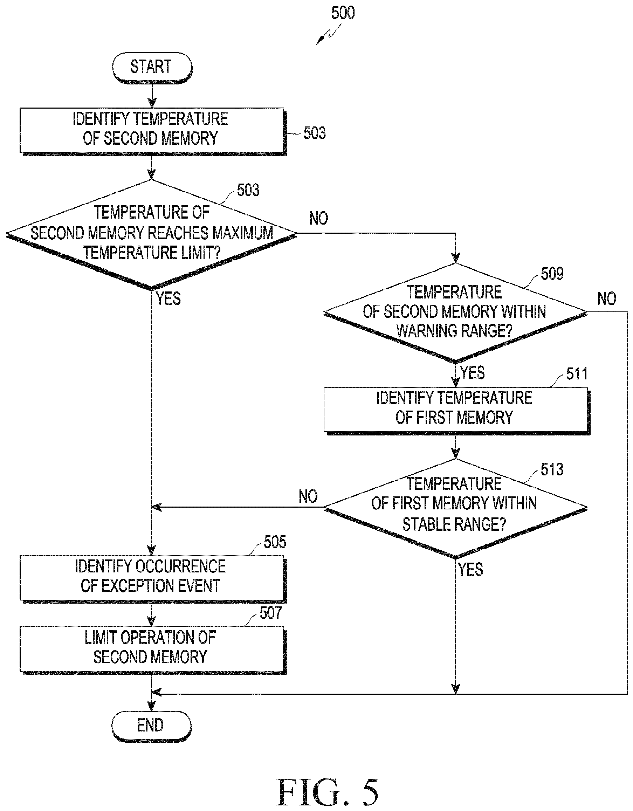

FIG. 5 is a flowchart illustrating a method for operating a second memory (e.g., the second memory 220 of FIG. 2) based on the temperature of a first memory (e.g., the first memory 210 of FIG. 2) and the second memory (e.g., the second memory 220 of FIG. 2) by an electronic device (e.g., the electronic device 101 of FIG. 1 or the electronic device 101 of FIG. 2) according to an embodiment of the disclosure.

In an embodiment, the operations shown in FIG. 5 are not limited to the shown order but may rather be performed in other various orders. For example, the order of the operations may be changed, and at least two operations may be performed in parallel. According to an embodiment, more or less operations than those of FIG. 5 may be performed.

In an embodiment, the electronic device 101 may operate the first memory 210 and/or the second memory 220 according to the internal temperature of the memory 130, thereby maintaining the performance of the non-volatile memory without limiting the performance of the non-volatile memory even at a temperature higher than room temperature.

In operation 501, in an embodiment, the electronic device 101 may identify the temperature of the second memory 220.

In an embodiment, the electronic device 101 may identify the temperature of the second memory 220, based on the sensing circuit included in the second memory 220. Since operation 501 is at least partially the same as or similar to operation 301 of FIG. 3, the same description as that of FIG. 3 may not be repeated.

In an embodiment, the electronic device 101 may set at least one temperature limit for the second memory 220 as at least part of the operation of initializing the second memory 220 based on booting of the second memory 220. In an embodiment, the electronic device 101 may reset the at least one temperature limit when the second memory 220 is rebooted, based on identifying that the temperature error of the second memory 220 is out of a preset range. For example, the electronic device 101 may reset the at least one temperature limit when the second memory 220 is rebooted, based on identifying that the error of the second memory 220 increases due to the longer operation period of the second memory 220. Regarding the setting of at least one temperature limit for the second memory 220, the same description as that of FIG. 4A or 4B may not be repeated. In an embodiment, the maximum high temperature limit (e.g., the maximum high temperature limit 411 of FIG. 4A) may be about 80 to 85 degrees Celsius. In an embodiment, the maximum low temperature limit (e.g., the maximum low temperature limit 413 of FIG. 4A) may be about -40 to -30 degrees Celsius. In an embodiment, the high temperature limit (e.g., the high temperature limit 421 of FIG. 4A) may be about 70 to 80 degrees Celsius. In an embodiment, the low temperature limit (e.g., the low temperature limit 423 of FIG. 4A) may be about -30 to -25 degrees Celsius. The specific value of the at least one temperature limit is not limited to the above-described example. In an embodiment, the electronic device 101 may divide a warning range (e.g., the warning range 440 of FIG. 4A) into one or more sub ranges. The electronic device 101 may provide a notification whenever the temperature of the second memory 220 falls out of one or more divided sub ranges.

In operation 503, in an embodiment, the electronic device 101 may identify whether the temperature of the second memory reaches the maximum temperature limit.

In an embodiment, the electronic device 101 may identify whether the temperature of the second memory 220 reaches the maximum temperature limit (e.g., the maximum high temperature limit 411 or the maximum low temperature limit 413 of FIG. 4A) for the second memory 220.

In operation 505, in an embodiment, the electronic device 101 may identify the occurrence of an exception event. In an embodiment, the electronic device 101 may identify that the exception event for the second memory 220 occurs, based on identifying that the temperature of the second memory 220 reaches the maximum temperature limit for the second memory 220 (yes in operation 503). In an embodiment, the exception event may be an event indicating that the temperature of the second memory 220 should be recovered into the stable range (e.g., the stable range 430 of FIG. 4A). For example, the electronic device 101 may identify that an event indicating that the temperature of the second memory 220 should be decreased occurs based on identifying that the temperature of the second memory 220 reaches the maximum high temperature limit 411. The electronic device 101 may identify that an event indicating that the temperature of the second memory 220 should be increased occurs based on identifying that the temperature of the second memory 220 reaches the maximum low temperature limit 413.

In operation 507, in an embodiment, the electronic device 101 may limit the operation of the second memory 220.

In an embodiment, the electronic device 101 may limit the operation of the second memory 220 based on identifying the occurrence of the exception event. In an embodiment, the electronic device 101 may limit the operation of the second memory 220 based on identifying the occurrence of an event indicating that the temperature of the second memory 220 should be decreased. For example, the electronic device 101 may set an enter delay for the hibern8 mode to a minimum value. The hibern8 mode may be an operation state for reducing power consumption of the second memory 220. The electronic device 101 may stop background operations (e.g., Auto-background operations (BKOPS)). The electronic device 101 may stop using a write booster. The write booster may be an operation of increasing download speed of content by increasing the write speed for the second memory 220. The electronic device 101 may set gear and lane values to the minimum. The electronic device 101 may reduce power consumption of the second memory 220 by setting the gear and lane values for the second memory 220 to the minimum. The electronic device 101 may stop using gear-scaling according to the I/O bandwidth. Gear scaling may be the operation of changing the gear value according to the memory bandwidth. The electronic device 101 may reduce power consumption for the second memory 220 by stopping gear scaling. The electronic device 101 may set the NAND swap value to the minimum in order to reduce the I/O quantity. The NAND swap may be an operation of moving (e.g., swapping-out) a page in the first memory 210 to the second memory 220 or moving (e.g., swapping-in) the moved page to the first memory 210. The electronic device 101 may reduce the amount of input/output to/from the second memory 220 by setting the NAND swap value to the minimum. The electronic device 101 may reduce the heat generation of the second memory 220 by limiting the operation of the second memory 220. The electronic device 101 may notify the user of the electronic device 101 that the operating speed of the electronic device 101 may decrease due to the increase in the temperature of the second memory 220. For example, the electronic device 101 may control the display module 160 such that the display module (e.g., the display module 160 of FIG. 1) displays a notification related to the reduction in the operation speed. In an embodiment, the electronic device 101 may activate the above-described operations based on identifying the occurrence of an event indicating that the temperature of the second memory 220 should be increased.

In operation 509, in an embodiment, the electronic device 101 may identify whether the temperature of the second memory 220 is within a warning range (e.g., the warning range 440 of FIG. 4A), based on identifying that the temperature of the second memory 220 does not reach the maximum temperature limit (no in operation 503). In an embodiment, the electronic device 101 may identify whether the temperature of the second memory 220 is within the warning range 440, based on the stable range (e.g., the stable range 430 of FIG. 4A) or the warning range 440 set for the second memory 220. In an embodiment, the electronic device 101 may not limit the operation of the second memory 220, based on identifying that the temperature of the second memory 220 is within the stable range 430 (no in operation 509). For example, the electronic device 101 may maintain the operation state of the second memory 220. In an embodiment, the electronic device 101 may increase the temperature check cycle of the second memory 220 based on identifying whether the temperature of the second memory 220 is within the stable range 430. For example, when the temperature of the second memory 220 is within the stable range 430, the electronic device 101 may increase the temperature check cycle of the second memory 220 from 1 second to 2 seconds. In an embodiment, based on identifying that the temperature of the second memory 220 is within the stable range 430, the electronic device 101 may increase the temperature check cycle of the second memory 220, thereby reducing power consumed to identify the temperature of the second memory 220.

In operation 511, in an embodiment, the electronic device 101 may identify the temperature of the first memory 210.

In an embodiment, the electronic device 101 may identify the temperature of the first memory 210, based on identifying that the temperature of the second memory 220 is within the warning range (yes in operation 509). The electronic device 101 may identify the temperature of the first memory 210, based on identifying the refresh rate of the first memory 210. Since operation 511 is at least partially the same as or similar to operation 303 of FIG. 3, the same description as that of FIG. 3 may not be repeated.

In operation 513, in an embodiment, the electronic device 101 may identify whether the temperature of the first memory 210 is within the stable range.

In an embodiment, the electronic device 101 may identify whether the temperature of the first memory 210 is within the stable range, based on at least one temperature limit set for the first memory 210. In an embodiment, based on identifying that the temperature of the first memory 210 is not within the stable range (no in operation 513), the electronic device 101 may identify the occurrence of the exception event for the second memory 220 (operation 505) and may limit the operation of the second memory 220 (operation 507). In the operation of limiting the operation of the second memory 220, the same description as that of operation 507 may not be repeated. The electronic device 101 may not limit the operation of the second memory 220 based on identifying that the temperature of the first memory 210 is within the stable range (yes in operation 513).

By identifying the temperature of the second memory 220 and further identifying the temperature of the first memory 210, the electronic device 101 may maintain the performance of the second memory 220 until it is identified that the temperature of the first memory 210 is not within the stable range without changing hardware.

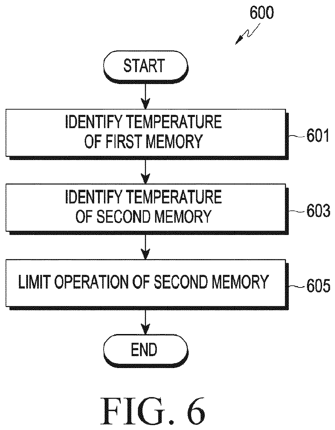

FIG. 6 is a flowchart 600 illustrating a method for operating a memory (e.g., the memory 130 of FIG. 1) based on a temperature of the memory (e.g., the memory 130 of FIG. 1) by an electronic device (e.g., the electronic device 101 of FIG. 1 or the electronic device 101 of FIG. 2) according to an embodiment of the disclosure.

In an embodiment, the operations shown in FIG. 6 are not limited to the shown order but may rather be performed in other various orders. For example, the order of the operations may be changed, and at least two operations may be performed in parallel. According to an embodiment, more or less operations than those of FIG. 6 may be performed. For example, operation 601 may be performed simultaneously with operation 603. Operation 603 may be performed before operation 601.

Referring to FIG. 6, in operation 601, in an embodiment, the electronic device 101 (e.g., the processor 120 of FIG. 1 or the processor 120 of FIG. 2) may identify the temperature of the first memory (210). In an embodiment, the electronic device 101 may identify the temperature of the first memory 210, based on identifying the refresh rate of the first memory 210.

In operation 603, in an embodiment, the electronic device 101 may identify the temperature of the second memory 220. In an embodiment, the electronic device 101 may identify the temperature of the second memory 220, based on the sensing circuit included in the second memory 220.

In operation 605, in an embodiment, the electronic device 101 may limit the operation of the second memory 220. In an embodiment, the electronic device 101 may limit the operation of the second memory 220 based on identifying that the temperature of the first memory 210 falls out of the stable range (e.g., the stable range 470 of FIG. 4B) for the first memory 210 or that the temperature of the second memory 220 falls out of the stable range (e.g., the stable range 430 of FIG. 4A) for the second memory 220.

In an embodiment, the electronic device 101 may limit the operation of the second memory 220 based on identifying that at least one of the temperature of the first memory 210 or the temperature of the second memory 220 reaches the temperature limit, thereby enhancing the safety and reliability of the second memory 220.

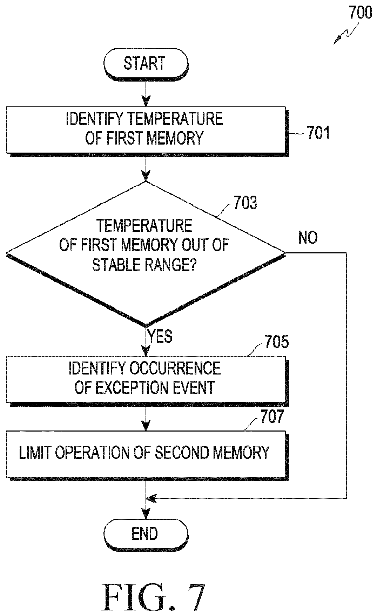

FIG. 7 is a flowchart illustrating a method for operating a second memory (e.g., the second memory 220 of FIG. 2) based on a temperature of a first memory (e.g., the first memory 210 of FIG. 2) by an electronic device (e.g., the electronic device 101 of FIG. 1 or the electronic device 101 of FIG. 2) according to an embodiment of the disclosure.

In an embodiment, the operations shown in FIG. 7 are not limited to the shown order but may rather be performed in other various orders. For example, the order of the operations may be changed, and at least two operations may be performed in parallel. According to an embodiment, more or less operations than those of FIG. 7 may be performed.

In operation 701, in an embodiment, the electronic device 101 may identify the temperature of the first memory 210. In an embodiment, the electronic device 101 may identify the temperature of the first memory 210, based on identifying the refresh rate of the first memory 210. Since the operation of identifying the temperature of the first memory 210 is at least partially the same as or similar to operation 303 of FIG. 3, the same description as that of FIG. 3 may not be repeated. In an embodiment, the processor 101 may set at least one temperature limit for the first memory 210 based on the refresh rate of the first memory 210 as at least part of initializing the first memory 210 based on the booting of the first memory 210.

In operation 703, in an embodiment, the electronic device 101 may identify whether the temperature of the first memory 210 falls out of the stable range. In an embodiment, the electronic device 101 may compare the temperature of the first memory 210 with at least one temperature limit set for the first memory 210, thereby identifying whether the temperature of the first memory 210 falls out of the stable range. The electronic device 101 may not limit the operation of the second memory 220 based on identifying that the temperature of the first memory 210 does not fall out of the stable range (no in operation 703). For example, the electronic device 101 may maintain the operation state of the second memory 220.

In operation 705, in an embodiment, the electronic device 101 may identify the occurrence of an exception event. In an embodiment, the electronic device 101 may identify the occurrence of the exception event, based on identifying that the temperature of the first memory 210 falls out of the stable range (yes in operation 703). In an embodiment, the exception event may be an event indicating that the temperature of the second memory 220 should be decreased or an event indicating that the temperature of the second memory 220 should be increased.

In operation 707, in an embodiment, the electronic device 101 may limit the operation of the second memory. Since operation 707 is at least partially the same as or similar to operation 507 of FIG. 5, the same description as that of FIG. 5 may not be repeated. In an embodiment, based on identifying only the temperature of the first memory 210, the electronic device 101 may determine whether to limit the operation of the second memory 220 without additionally identifying the temperature of the second memory 220. The electronic device 101 may enhance the stability of the second memory 220 based on determining whether to limit the operation of the second memory 220 based on the temperature of the first memory 210 having a relatively small error.

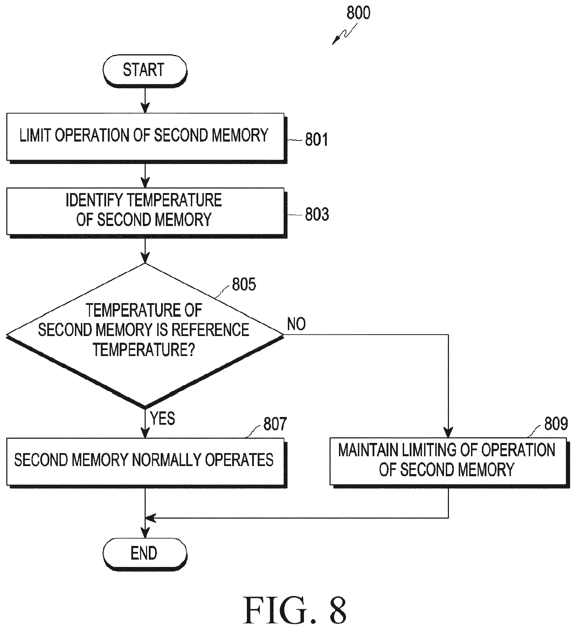

FIG. 8 is a flowchart illustrating a method for determining whether to maintain limiting the operation of a memory (e.g., the memory 130 of FIG. 1) by an electronic device (e.g., the electronic device 101 of FIG. 1 or the electronic device 101 of FIG. 2) according to an embodiment of the disclosure.

In an embodiment, the operations shown in FIG. 8 are not limited to the shown order but may rather be performed in other various orders. For example, the order of the operations may be changed, and at least two operations may be performed in parallel. According to an embodiment, more or less operations than those of FIG. 8 may be performed.

Referring to FIG. 8, in operation 801, in an embodiment, the electronic device 101 (e.g., the processor 120 of FIG. 1 or the processor 120 of FIG. 2) may limit the operation of the second memory (e.g., the second memory 220 of FIG. 2). In an embodiment, operation 801 is at least partially the same as or similar to operation 305 of FIG. 3, operation 511 of FIG. 5, operation 605 of FIG. 6, or operation 707 of FIG. 7, and the same description as that of FIG. 3 may not be repeated.

In operation 803, in an embodiment, the electronic device 101 may identify the temperature of the second memory 220. In an embodiment, the electronic device 101 may monitor the temperature of the second memory 220 while limiting the operation of the second memory 220. The electronic device 101 may identify the temperature of the second memory 220 through the sensing circuit included in the second memory 220. The electronic device 101 may, for example, measure the temperature of the second memory 220 at a set time period. In operation 805, in an embodiment, the electronic device 101 may identify whether the temperature of the second memory 220 corresponds to a reference temperature.

In an embodiment, the electronic device 101 may identify whether the obtained temperature of the second memory 220 corresponds to a reference temperature (e.g., T1 of FIG. 4A) set for the second memory 220. In an embodiment, the reference temperature may be a temperature value set for the second memory 220 or may be a predetermined temperature range.

In operation 807, in an embodiment, the electronic device 101 may control the second memory 220 to operate normally. In an embodiment, the electronic device 101 may release the limiting of the operation of the second memory 220 based on identifying whether the temperature of the second memory 220 corresponds to the reference temperature. For example, based on identifying that the temperature of the second memory 220 corresponds to the reference temperature (yes in operation 805), the electronic device 101 may release the limiting of the operation of the second memory 220.

In an embodiment, after operation 805, the electronic device 101 may further identify the temperature of the first memory 210. For example, the electronic device 101 may monitor the temperature of the first memory 210 at a set time period. The electronic device 101 may further identify the temperature of the first memory 210, based on identifying that the temperature of the second memory 220 corresponds to the reference temperature (yes in operation 805). Based on identifying whether the temperature of the first memory 210 corresponds to the reference temperature, the electronic device 101 may determine whether to release the limiting of the operation of the second memory 220. For example, the electronic device 101 may release the limiting of the operation of the second memory 220 (e.g., operation 807) based on identifying that the temperature of the first memory 210 corresponds to the reference temperature. Based on identifying that the temperature of the first memory 210 does not correspond to the reference temperature, the electronic device 101 may maintain the limitation of the operation of the second memory 220 (e.g., operation 809).

In an embodiment, instead of operations 803 and 805, the electronic device 101 may determine whether to release the limiting of the operation of the second memory 220, based on identifying whether the temperature of the first memory 210 corresponds to the reference temperature. After operation 801, the electronic device 101 may identify the temperature of the first memory 210. The electronic device 101 may release the limiting of the operation of the second memory 220 (e.g., operation 807) based on identifying that the temperature of the first memory 210 corresponds to the reference temperature. Based on identifying that the temperature of the first memory 210 does not correspond to the reference temperature, the electronic device 101 may maintain the limitation of the operation of the second memory 220 (e.g., operation 809).

In operation 809, in an embodiment, the electronic device 101 may maintain the limiting of the operation of the second memory 220.

In an embodiment, based on identifying that the temperature of the second memory 220 does not correspond to the reference temperature (no in operation 805), the electronic device 101 may maintain the limiting of the operation of the second memory 220.

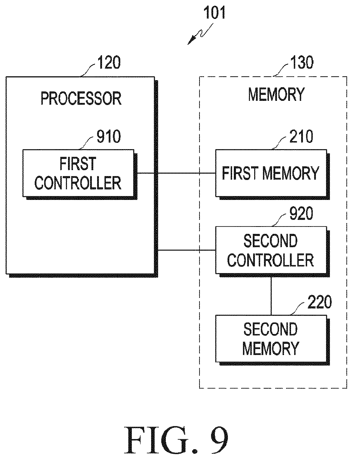

FIG. 9 is a block diagram illustrating an example configuration of an electronic device (e.g., the electronic device 101 of FIG. 1 or the electronic device 101 of FIG. 2) according to an embodiment of the disclosure.

Referring to FIG. 9, in an embodiment, the electronic device 101 may include a processor 120, and a memory 130 including a first memory 210 and a second memory 220. In an embodiment, the electronic device 101 may further include a first controller 910 for controlling the first memory 210 and a second controller 920 for controlling the second memory 220. In an embodiment, the first controller 910 may operate as a part of the processor 120. In an embodiment, the second controller 920 may be disposed as a part of the memory 130. In an embodiment, the processor 120 may communicate with the first memory 210 through the first controller 910. The processor 120 may communicate with the second memory 220 through the second controller 920. For example, the processor 120 may identify that an exception event occurs in the second memory 220 through the second controller 920. In an embodiment, the notification received from the second controller 920 may be referred to as an "ExceptionEventStatus" notification.

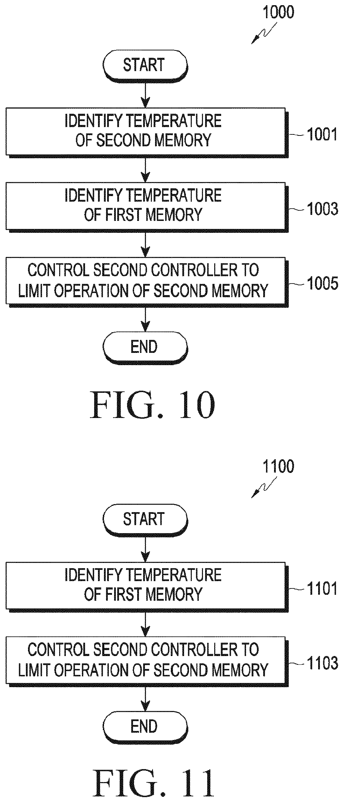

FIG. 10 is a flowchart 1000 illustrating a method for operating a memory (e.g., the memory 130 of FIG. 1) through a controller (e.g., the first controller 910 or the second controller 920 of FIG. 9) based on the temperature of a first memory (e.g., the first memory 210 of FIG. 2 or the first memory 210 of FIG. 9) and a second memory (e.g., the second memory 220 of FIG. 2 or the second memory 220 of FIG. 9) by an electronic device (e.g., the electronic device 101 of FIG. 1, the electronic device 101 of FIG. 2, or the electronic device 101 of FIG. 9) according to an embodiment of the disclosure.

In an embodiment, the operations shown in FIG. 10 are not limited to the shown order but may rather be performed in other various orders. For example, the order of the operations may be changed, and at least two operations may be performed in parallel. According to an embodiment, more or less operations than those of FIG. 10 may be performed.

Referring to FIG. 10, in operation 1001, in an embodiment, the electronic device 101 (e.g., the processor 120 of FIG. 1 or the processor 120 of FIG. 2) may identify the temperature of the second memory 220. In an embodiment, the processor 120 may identify the temperature of the second memory 220 based on communication with the second controller 920. In an embodiment, the same description as that of operation 301 of FIG. 3 is not repeated in connection with operation 1001.

In operation 1003, in an embodiment, the electronic device 101 may identify the temperature of the first memory 210. In an embodiment, the processor 120 may identify the temperature of the first memory 210 based on communication with the first controller 910. In an embodiment, the same description as that of operation 303 of FIG. 3 is not repeated in connection with operation 1003.

In operation 1005, in an embodiment, the electronic device 101 may control the second controller 920 to limit the operation of the second memory 220. In an embodiment, the processor 120 may transmit a control signal to the second memory 220 through the second controller 920. In an embodiment, the processor 120 may increase the temperature of the second memory 220 which is in a high-temperature state based on the limiting of the operation of the second memory 220 or increase the temperature of the second memory 220 which is in a low-temperature state based on activating the operations of the second memory 220. An example operation of limiting or activating the operation of the second memory 220 by the electronic device 101 (e.g., the processor 120) is identical or similar in whole or part to operation 507 of FIG. 5, and the same description as that of FIG. 5 may not be repeated.

FIG. 11 is a flowchart 1100 illustrating a method for operating a memory (e.g., the memory 130 of FIG. 1) through a controller (e.g., the first controller 910 or the second controller 920 of FIG. 9) based on a temperature of a first memory (e.g., the first memory 210 of FIG. 2) by an electronic device (e.g., the electronic device 101 of FIG. 1, the electronic device 101 of FIG. 2, or the electronic device 101 of FIG. 9) according to an embodiment of the disclosure.

In an embodiment, the operations shown in FIG. 11 are not limited to the shown order but may rather be performed in other various orders. For example, the order of the operations may be changed, and at least two operations may be performed in parallel. According to an embodiment, more or less operations than those of FIG. 11 may be performed. For example, operation 1101 may be performed simultaneously with operation 1103. Operation 1103 may be performed before operation 1101.

Referring to FIG. 11, in operation 1101, in an embodiment, the electronic device 101 (e.g., the processor 120 of FIG. 1 or the processor 120 of FIG. 2) may identify the temperature of the first memory (210). In an embodiment, the processor 120 may identify the temperature of the first memory 210 based on communication with the first controller 910. In an embodiment, the same description as that of operation 601 of FIG. 6 is not repeated in connection with operation 1101.

In operation 1103, in an embodiment, the electronic device 101 may control the second controller 920 to limit the operation of the second memory 220. In an embodiment, the processor 120 may transmit a control signal to the second memory 220 through the second controller 920 based on identifying that the temperature of the first memory 210 is out of the stable range (e.g., the stable range 470 of FIG. 4B) for the first memory 210. The processor 120 may set at least one temperature limit for the first memory 210 as at least part of initializing the first memory 210 based on the booting of the first memory 210. The processor 120 may identify whether the temperature of the first memory 210 is out of the stable range 470 based on comparing the temperature of the first memory 210 with the at least one temperature limit. In an embodiment, the processor 120 may increase the temperature of the second memory 220 which is in a high-temperature state based on the limiting of the operation of the second memory 220 or increase the temperature of the second memory 220 which is in a low-temperature state based on activating the operations of the second memory 220. An example operation of limiting or activating the operation of the second memory 220 by the electronic device 101 (e.g., the processor 120) is identical or similar in whole or part to operation 507 of FIG. 5, and the same description as that of FIG. 5 may not be repeated.

An electronic device 101 according to an embodiment of the disclosure may comprise memory 130 storing instructions, wherein the memory 130 including first memory 210 and second memory 220, and a processor 120 operatively connected to the memory 130. The instructions, when executed by the processor 120 may cause the electronic device to identify a temperature of the second memory 220. The instructions, when executed by the processor 120 may cause the electronic device to identify a temperature of the first memory 210 based on identifying that the temperature of the second memory 220 is within a warning range 440 for the second memory 220. The instructions, when executed by the processor 120 may cause the electronic device to limit an operation of the second memory 220 based on the temperature of the first memory 210.

According to an embodiment, the instructions, when executed by the processor 120 may cause the electronic device to maintain the operation state of the second memory 220 based on identifying that the temperature of the first memory 210 is within a stable range 470 for the first memory 210.

According to an embodiment, the instructions, when executed by the processor 120 may cause the electronic device to limit the operation of the second memory 220 based on identifying that the temperature of the first memory 210 is not within a stable range 470 for the first memory 210.

The instructions, when executed by the processor 120 may cause the electronic device to monitor the temperature of the first memory 210 while limiting the operation of the second memory 220. The instructions, when executed by the processor 120 may cause the electronic device to release the limiting of the operation of the second memory 220 based on identifying that the identified temperature of the first memory 210 corresponds to a reference temperature. The instructions, when executed by the processor 120 may cause the electronic device to maintain the limiting of the operation of the second memory 220 based on identifying that the identified temperature of the first memory 210 does not correspond to the reference temperature.

According to an embodiment, the instructions, when executed by the processor 120 may cause the electronic device to identify the temperature of the second memory 220 while limiting the operation of the second memory 220. The instructions, when executed by the processor 120 may cause the electronic device to determine whether to release the limiting of the operation of the second memory 220 based on the identified temperature of the second memory 220.

According to an embodiment, the instructions, when executed by the processor 120 may cause the electronic device to release the limiting of the operation of the second memory 220 based on identifying that the temperature of the second memory 220 corresponds to a reference temperature.

According to an embodiment, the instructions, when executed by the processor 120 may cause the electronic device to maintain the limiting of the operation of the second memory 220 based on identifying that the temperature of the second memory 220 does not correspond to a reference temperature.

According to an embodiment, the instructions, when executed by the processor 120 may cause the electronic device to identify whether the temperature of the second memory 220 reaches a maximum temperature limit 410 for the second memory 220. The instructions, when executed by the processor 120 may cause the electronic device to identify that an exception event for the second memory 220 occurs based on identifying that the temperature of the second memory 220 reaches the maximum temperature limit 410 for the second memory 220.

According to an embodiment, the instructions, when executed by the processor 120 may cause the electronic device to identify whether the temperature of the second memory 220 is within the warning range 440 based on identifying that the temperature of the second memory 220 does not reach a maximum temperature limit 410 for the second memory 220.

According to an embodiment of the disclosure, an electronic device 101 may comprise memory 130 storing instructions, wherein the memory 130 including first memory 210 and second memory 220, and a processor 120 operatively connected to the memory 130. The instructions, when executed by the processor 120 may cause the electronic device to identify a temperature of the first memory 210. The instructions, when executed by the processor 120 may cause the electronic device to limit the operation of the second memory 220 based on identifying that the temperature of the first memory 210 is out of a stable range 470 for the first memory 210.

According to an embodiment, instructions, when executed by the processor 120 may cause the electronic device to identify the temperature of the second memory 220 while limiting the operation of the second memory 220. The instructions, when executed by the processor 120 may cause the electronic device to release the limiting of the operation of the second memory 220 based on identifying that the temperature of the second memory 220 corresponds to a reference temperature.

A method for operating memory 130 of an electronic device 101 according to an embodiment of the disclosure may comprise identifying a temperature of second memory 220 of the electronic device 101. The method may comprise identifying a temperature of first memory 210 of the electronic device 101 based on identifying that the temperature of the second memory 220 is within a warning range 440 for the second memory 220. The method may comprise limiting an operation of the second memory 220 based on the temperature of the first memory 210.

According to an embodiment, in the method, limiting the operation of the second memory 220 based on the temperature of the first memory 210 may include maintaining an operation state of the second memory 220 based on identifying that the temperature of the first memory 210 is within a stable range 470 for the first memory 210.

According to an embodiment, in the method, limiting the operation of the second memory 220 based on the temperature of the first memory 210 may include limiting the operation of the second memory 220 based on identifying that the temperature of the first memory 210 is not within a stable range 470 for the first memory 210.

According to an embodiment, the method may further comprise identifying the temperature of the first memory 210 while limiting the operation of the second memory 220. The method may further comprise releasing the limiting of the operation of the second memory 220 based on identifying that the identified temperature of the first memory 210 corresponds to a reference temperature. The method may further comprise maintaining the limiting of the operation of the second memory 220 based on identifying that the identified temperature of the first memory 210 does not correspond to the reference temperature.

According to an embodiment, the method may further comprise identifying the temperature of the second memory 220 while limiting the operation of the second memory 220. The method may further comprise determining whether to release the limiting of the operation of the second memory 220 based on the identified temperature of the second memory 220.

According to an embodiment, in the method, determining whether to release the limiting of the operation of the second memory 220 based on the temperature of the second memory 220 may include releasing the limiting of the operation of the second memory 220 based on identifying that the temperature of the second memory 220 corresponds to a reference temperature.

According to an embodiment, in the method, determining whether to release the limiting of the operation of the second memory 220 based on the temperature of the second memory 220 may include maintaining the limiting of the operation of the second memory 220 based on identifying that the temperature of the second memory 220 does not correspond to a reference temperature.

According to an embodiment, the method may further comprise identifying whether the temperature of the second memory 220 reaches a maximum temperature limit 410 for the second memory 220. The method may further comprise identifying that an exception event for the second memory 220 occurs based on identifying that the temperature of the second memory 220 reaches the maximum temperature limit 410 for the second memory 220.

According to an embodiment, the method may further comprise identifying whether the temperature of the second memory 220 is within the warning range 440 based on identifying that the temperature of the second memory 220 does not reach a maximum temperature limit 410 for the second memory 220.

A method for operating a memory 130 of an electronic device 101 according to an embodiment of the disclosure may comprise identifying a temperature of a first memory 210 of the electronic device 101. The method may comprise limiting the operation of the second memory 220 based on identifying that the temperature of the first memory 210 is out of a stable range 470 for the first memory 210.

According to an embodiment, the method may further comprise identifying the temperature of the second memory 220 while limiting the operation of the second memory 220. The method may further comprise releasing the limiting of the operation of the second memory 220 based on identifying that the temperature of the second memory 220 corresponds to a reference temperature.

The electronic device according to an embodiment of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

An embodiment of the disclosure may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The storage medium readable by the machine may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to an embodiment of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smartphones) directly. If distributed online, at least part of the computer program product may be temporarily generated or at least temporarily stored in the machine-readable storage medium, such as memory of the manufacturer's server, a server of the application store, or a relay server.

According to an embodiment, each component (e.g., a module or a program) of the above-described components may include a single entity or multiple entities. Some of the plurality of entities may be separately disposed in different components. According to an embodiment, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

Further, the structure of the data used in embodiments of the disclosure may be recorded in a computer-readable recording medium via various means. The computer-readable recording medium includes a storage medium, such as a magnetic storage medium (e.g., a ROM, a floppy disc, or a hard disc) or an optical reading medium (e.g., a CD-ROM or a DVD).

When the internal device temperature sensor of a storage does not provide temperature values in a sufficiently accurate manner, it may be difficult to detect malfunctions caused by temperature changes before they manifest as defects. Furthermore, the ability to regulate temperature in the device is also important. The temperature error range for determining the internal device temperature may be relatively large, for instance in the order of magnitude of ±10°C. According to embodiments of the present disclosure the temperature may be determined more accurately, i.e. in a narrower temperature range. For instance, temperature information provided by the memory can be used to increase the reliability of the data of the storage, for instance without modifying the hardware. Alternatively or additionally, the storage performance can be improved and/or current consumption can be reduced as a result of the received more accurate temperature information.

In case of utilizing a MCP (multi-chip package) comprising both a dynamic random access memory (DRAM) and storage in a single package, it may be possible in embodiments of the present disclosure to improve storage performance by using the internal temperature value of DRAM and storage, reduce current consumption, and secure storage data reliability.

The present disclosure also relates to the following clauses.

Clause 1. A method for operating a memory of an electronic device, the memory comprising a first memory and a second memory, wherein the method comprises:
identifying a temperature of the first memory; and limiting an operation of the second memory based on the identified temperature of the first memory.

Clause 2. The method according to clause 1, wherein the method further comprises maintaining an operation state of the second memory in response to identifying that the identified temperature of the first memory is within a stable range for the first memory; and/or wherein limiting the operation of the second memory based on the identified temperature of the first memory includes limiting the operation of the second memory in response to identifying that the identified temperature of the first memory is not within a stable range for the first memory.

Clause 3. The method according to clause 1 or 2, further comprising identifying a temperature of the second memory, wherein identifying the temperature of the first memory includes identifying the temperature of the first memory if the identified temperature of the second memory is within a warning range for the second memory.

Clause 4. The method according to clause 3, further comprising identifying whether the temperature of the second memory is within the warning range based on identifying that the temperature of the second memory has not reached a maximum temperature limit for the second memory.

Clause 5. The method according to any of the clauses 1-4, further comprising: identifying the temperature of the first memory again while the operation of the second memory is limited; and determining whether to release the limitation of the operation of the second memory based on said identified temperature of the first memory.

Clause 6. The method according to clause 5, wherein determining whether to release the limitation of the operation of the second memory based on said identified temperature of the first memory includes: releasing the limitation of the operation of the second memory in response to identifying that said identified temperature of the first memory corresponds to a reference temperature; and/or maintaining the limitation of the operation of the second memory in response to identifying that said identified temperature of the first memory does not correspond to a reference temperature.

Clause 7. The method according to any of the clauses 1-6, further comprising: identifying the temperature of the second memory while the operation of the second memory is limited; and determining whether to release the limitation of the operation of the second memory based on the identified temperature of the second memory.

Clause 8. The method according to clause 6, wherein determining whether to release the limitation of the operation of the second memory based on the identified temperature of the second memory includes: releasing the limitation of the operation of the second memory in response to identifying that the identified temperature of the second memory corresponds to a reference temperature; and/or maintaining the limitation of the operation of the second memory in response to identifying that the identified temperature of the second memory does not correspond to a reference temperature.

Clause 9. The method according to any of the clauses 1-8, further comprising: identifying whether the temperature of the second memory has reached a maximum temperature limit for the second memory; and identifying that an exception event for the second memory occurs in response to identifying that the temperature of the second memory has reached the maximum temperature limit for the second memory, wherein the method preferably further comprises limiting the operation of the second memory based on identifying the occurrence of the exception event.

Clause 10. The method according to any of the clauses 1-9, wherein limiting the operation of the second memory is for reducing heat generation of the second memory, wherein, preferably, limiting the operation of the second memory includes at least one of: setting an enter delay for a hibern8 mode to a minimum value, the hibern8 mode being an operation state for reducing power consumption of the second memory; stopping background operations, such as Auto-background operations, 'BKOPS'; stopping using a write booster, the write booster being an operation of increasing download of content by increasing a write speed for the second memory; setting gear and lane values to a minimum; stopping using gear-scaling according to an I/O bandwidth, gear scaling being an operation of changing a gear value according to memory bandwidth; and setting a NAND swap value to a minimum, NAND swapping being an operation of moving a page in the first memory to the second memory or moving the moved page to the first memory.

Clause 11. The method according to any of the clauses 1-10, wherein each of the first memory and the second memory includes a sensing circuit for obtaining an internal temperature, wherein, preferably, an error in temperature of the first memory obtained based on the sensing circuit included in the first memory is smaller than an error in temperature of the second memory obtained based on the sensing circuit included in the second memory.

Clause 12. The method according to any of the clauses 1-11, wherein the first memory is included in a volatile memory of the electronic device, such as a dynamic random access memory, 'DRAM', and wherein the second memory is included in the non-volatile memory of the electronic device, such as universal flash storage, 'UFS', or an embedded multi-media card, 'eMMC'.

Clause 13. The method according to any of the clauses 1-12, wherein the first memory and the second memory are included in a multi-chip package, 'MCP', included in the electronic device.

Clause 14. A non-transitory machine-readable storage medium storing instructions which, when executed by at least one processor, cause the at least one processor to perform the method according to any of the clauses 1-13.

Clause 15. An electronic device, comprising: a first memory; a second memory; and at least one processor operatively connected to the first memory and the second memory, wherein the at least one processor is configured to identify a temperature of the first memory; and limit an operation of the second memory based on the identified temperature of the first memory.

Clause 16. The electronic device according to clause 15, wherein the at least one processor is further configured to maintain an operation state of the second memory in response to identifying that the identified temperature of the first memory is within a stable range for the first memory; and/or wherein the at least one processor is configured to limit the operation of the second memory in response to identifying that the identified temperature of the first memory is not within a stable range for the first memory.

Clause 17. The electronic device according to clause 15 or 16, wherein the at least one processor is further configured to identify a temperature of the second memory, and to identify the temperature of the first memory if the identified temperature of the second memory is within a warning range for the second memory.

Clause 18. The electronic device according to clause 17, wherein the at least one processor is further configured to identify whether the temperature of the second memory is within the warning range based on identifying that the temperature of the second memory has not reached a maximum temperature limit for the second memory.

Clause 19. The electronic device according to any of the clauses 15-18, wherein the at least one processor is further configured to: identif the temperature of the first memory again while the operation of the second memory is limited; and determine whether to release the limitation of the operation of the second memory based on said identified temperature of the first memory.

Clause 20. The electronic device according to clause 19, wherein the at least one processor is configured to: release the limitation of the operation of the second memory in response to identifying that said identified temperature of the first memory corresponds to a reference temperature; and/or maintain the limitation of the operation of the second memory in response to identifying that said identified temperature of the first memory does not correspond to a reference temperature.

Clause 21. The electronic device according to any of the clauses 15-20, wherein the at least one processor is further configured to: identify the temperature of the second memory while the operation of the second memory is limited; and determine whether to release the limitation of the operation of the second memory based on the identified temperature of the second memory.

Clause 22. The electronic device according to clause 21, wherein the at least one processor is configured to: release the limitation of the operation of the second memory in response to identifying that the identified temperature of the second memory corresponds to a reference temperature; and/or maintain the limitation of the operation of the second memory in response to identifying that the identified temperature of the second memory does not correspond to a reference temperature.

Clause 23. The electronic device according to any of the clauses 15-22, wherein the at least one processor is further configured to: identify whether the temperature of the second memory has reached a maximum temperature limit for the second memory; and identify that an exception event for the second memory occurs in response to identifying that the temperature of the second memory has reached the maximum temperature limit for the second memory, wherein the at least one processor is preferably configured to limit the operation of the second memory based on identifying the occurrence of the exception event.

Clause 24. The electronic device according to any of the clauses 15-23, wherein limiting the operation of the second memory is for reducing heat generation of the second memory, wherein, to limit the operation of the second memory, the at least one processor is configured to: set an enter delay for a hibern8 mode to a minimum value, the hibern8 mode being an operation state for reducing power consumption of the second memory; stopping background operations, such as Auto-background operations, 'BKOPS'; stop using a write booster, the write booster being an operation of increasing download of content by increasing a write speed for the second memory; set gear and lane values to a minimum; stop using gear-scaling according to an I/O bandwidth, gear scaling being an operation of changing a gear value according to memory bandwidth; and set a NAND swap value to a minimum, NAND swapping being an operation of moving a page in the first memory to the second memory or moving the moved page to the first memory.

Clause 25. The electronic device according to any of the clauses 15-24, wherein each of the first memory and the second memory includes a sensing circuit for obtaining an internal temperature, wherein, preferably, an error in temperature of the first memory obtained based on the sensing circuit included in the first memory is smaller than an error in temperature of the second memory obtained based on the sensing circuit included in the second memory.

Clause 26. The electronic device according to any of the clauses 15-25, wherein the first memory is included in a volatile memory of the electronic device, such as a dynamic random access memory, 'DRAM', and wherein the second memory is included in the non-volatile memory of the electronic device, such as universal flash storage, 'UFS', or an embedded multi-media card, 'eMMC'.

Example embodiments of the disclosure have been described above. The above-described embodiments are merely examples, and it will be appreciated by one of ordinary skill in the art various changes may be made thereto without departing from the scope of the present invention. Therefore, the disclosed embodiments should be considered from an illustrative, rather than a limiting, point of view. The scope of the invention is indicated in the claims rather than in the above-described description. All differences within the equivalent range should be construed as being included in the present invention.

## Claims

1. A method for operating memory (130) of an electronic device (101), the memory (130) comprising a first memory (210) and a second memory (220),
wherein the method comprises:
identifying a temperature of the second memory (220) of the electronic device (101);identifying a temperature of the first memory (210) of the electronic device (101) based on identifying that the temperature of the second memory (220) is within a warning range (440) for the second memory (220); and
limiting an operation of the second memory (220) based on the identified temperature of the first memory (210).

2. The method according to claim 1, wherein the method further comprises maintaining an operation state of the second memory (220) in response to identifying that the identified temperature of the first memory (210) is within a stable range (470) for the first memory (210).

3. The method according to claim 1 or 2, wherein limiting the operation of the second memory (220) based on the identified temperature of the first memory (210) includes limiting the operation of the second memory (220) in response to identifying that the identified temperature of the first memory (210) is not within a stable range (470) for the first memory (210).

4. The method according to any one of claims 1 to 3, further comprising identifying whether the temperature of the second memory (220) is within the warning range (440) based on identifying that the temperature of the second memory (220) has not reached a maximum temperature limit (410) for the second memory (220).

5. The method according to any of the claims 1 to 4, further comprising:
monitor the temperature of the first memory (210) while the operation of the second memory (220) is limited; and
determining whether to release the limitation of the operation of the second memory (220) based on said monitored temperature of the first memory (210).

6. The method according to claim 5, wherein determining whether to release the limitation of the operation of the second memory (220) based on said monitored temperature of the first memory (210) includes:
releasing the limitation of the operation of the second memory (220) in response to identifying that said monitored temperature of the first memory (210) corresponds to a reference temperature; and/or
maintaining the limitation of the operation of the second memory (220) in response to identifying that said monitored temperature of the first memory (210) does not correspond to a reference temperature.

7. The method according to any of the previous claims, further comprising:
identifying the temperature of the second memory (220) while the operation of the second memory (220) is limited; and
determining whether to release the limitation of the operation of the second memory (220) based on the identified temperature of the second memory (220).

8. The method according to claim 7, wherein determining whether to release the limitation of the operation of the second memory (220) based on the identified temperature of the second memory (220) includes:
releasing the limitation of the operation of the second memory (220) in response to identifying that the identified temperature of the second memory (220) corresponds to a reference temperature; and/or
maintaining the limitation of the operation of the second memory (220) in response to identifying that the identified temperature of the second memory (220) does not correspond to a reference temperature.

9. The method according to any of the previous claims, further comprising:
identifying whether the temperature of the second memory (220) has reached a maximum temperature limit (410) for the second memory (220); and
identifying that an exception event for the second memory (220) occurs in response to identifying that the temperature of the second memory (220) has reached the maximum temperature limit (410) for the second memory (220),
wherein the method preferably further comprises limiting the operation of the second memory (220) based on identifying the occurrence of the exception event.

10. The method according to any of the previous claims, wherein limiting the operation of the second memory (220) is for reducing heat generation of the second memory (220),
wherein, preferably, limiting the operation of the second memory (220) includes at least one of:
setting an enter delay for a hibern8 mode to a minimum value, the hibern8 mode being an operation state for reducing power consumption of the second memory (220);
stopping background operations, including Auto-background operations, 'BKOPS';
stopping using a write booster, the write booster being an operation of increasing download speed of content by increasing a write speed for the second memory (220);
setting gear and lane values to a minimum;
stopping using gear-scaling according to an I/O bandwidth, gear scaling being an operation of changing a gear value according to memory bandwidth; and
setting a NAND swap value to a minimum, NAND swapping being an operation of moving a page in the first memory (210) to the second memory (220) or moving the moved page to the first memory (210).

11. The method according to any of the previous claims, wherein each of the first memory (210) and the second memory (220) includes a sensing circuit for obtaining an internal temperature,
wherein, preferably, an error in temperature of the first memory (210) obtained based on the sensing circuit included in the first memory (210) is smaller than an error in temperature of the second memory (220) obtained based on the sensing circuit included in the second memory (220).

12. The method according to any of the previous claims, wherein the first memory (210) is included in volatile memory (132) of the electronic device (101) including, dynamic random access memory, 'DRAM', and wherein the second memory (220) is included in the non-volatile memory (134) of the electronic device including, universal flash storage, 'UFS', or an embedded multi-media card, 'eMMC'.

13. The method according to any of the previous claims, wherein the first memory (210) and the second memory (220) are included in a multi-chip package, 'MCP', included in the electronic device (101).

14. A machine-readable storage medium storing instructions which, when executed by a processor of an electronic device, cause the electronic device to perform at least one operation, wherein the at least one operation includes:
identifying a temperature of the second memory (220) of the electronic device (101);
identifying a temperature of the first memory (210) of the electronic device (101) based on identifying that the temperature of the second memory (220) is within a warning range (440) for the second memory (220); and
limiting an operation of the second memory (220) based on the identified temperature of the first memory (210).

15. An electronic device (101), comprising:
memory (130) storing instructions, wherein the memory (130) including first memory (210) and second memory (220); and a processor (120) operatively connected to the memory (130),
wherein the instructions, when executed by the processor, cause the electronic device to perform at least:
identify a temperature of the second memory (220) of the electronic device (101);
identify a temperature of the first memory (210) of the electronic device (101) based on identifying that the temperature of the second memory (220) is within a warning range (440) for the second memory (220); and
limit an operation of the second memory (220) based on the identified temperature of the first memory (210).
